# EUROPEAN PATENT SPECIFICATION

(11) **EP 4 637 329 B1**
(45) Date of publication and mention of the grant of the patent: **11.11.2026**
(21) Application number: 23832856.1
(22) Date of filing: 15.12.2023
(51) Int. Cl.: A01J 5/013, A01J 5/04, G01N 1/00

(54) **MILK SAMPLING SYSTEM**
MILCHPROBENAHMESYSTEM
SYSTÈME D'ÉCHANTILLONNAGE DE LAIT

(30) Priority: 21.12.2022 SE 2251502
(43) Date of publication of application: 29.10.2025
(73) Proprietor: DeLaval Holding AB, 147 21 Tumba (SE)
(72) Inventor: CARLSEN, Thomas Nikolai, 147 21 Tumba (SE); GUDMUNDSSON, Kristjan Freyr, 147 21 Tumba (SE)
(74) Representative: DeLaval International AB
(86) International application number: PCT/SE2023/051261
(87) International publication number: WO 2024/136729

(56) References cited:
- WO-A1-2022/200946
- US-A- 4 140 018
- US-A- 5 823 134

## Description

### TECHNICAL FIELD

The invention disclosed herewith relates to a milk sampling system according to claim 1.

### BACKGROUND

On a dairy farm, it is important to monitor animal status and health, to enhance milk yield. It is also important to find the right moment to inseminate each individual animal in the farm, in order to successfully fertilise the animal. In case the animal is not successfully inseminated, milk production is affected.

Several measurements may be made on the animal, such as e.g. measuring levels of progesterone, LDH (Lactate Dehydrogenase), BHB (Beta-Hydroxybutyrat), fat, lactose, somatic cell count and/ or urea, for example. Thereby important information concerning e.g. heat detection and/ or pregnancy of the individual animal may be made (based on measured progesterone level), as well as mastitis (based on LDH) and ketosis (based on BHB). Also, the energy balance may be estimated (based on urea).

Thereby, the farmer is provided with important information concerning each individual animal. However, extracting a milk sample from a particular animal and provide it to a biomarker measurement unit presents several problems.

The measurement or test may preferably be made automatically in a milk analyser.

WO 2022/200946 A1 disclose a sampling device for taking a representative milk sample from a milking device. The milking device comprises milking means, a milk jar, a milk hose between the milking means and the milk jar, a milk tank, a milk line between the milk jar and the milk tank, a milk pump for pumping the milk from the milk jar to the milk tank, a milk meter for determining the quantity of milk milked, and a control unit.

One problem is often referred to as "carry over", meaning that milk residues of a first animal remain in the milk sampling device and/ or tubes thereof when a milk sample of a second animal is captured. The properties of the milk sample of the first animal will thereby affect the properties of the milk sample of the second animal.

Eager cleaning may present a solution. However, previously known milk sample devices used in a milking robot context are cleaned together with the milking robot, about every 8 hours.

Another problem is that detergent/ cleaning water in the milk sampling device and/ or chemicals used in the milk analyser by mistake or malfunction of valves, pumps and/ or leakage of tubings may return to a milk reservoir or milk line and contaminate the therein comprised milk, which then has to be wasted. In an even worse scenario, the malfunction may pass undetected and contaminated milk may reach the consumer.

It would be desired to find a way to automate milk sample extraction at a milking point, thereby automating both the milk extraction and the forwarding of the extracted milk to milk analyse equipment for analysis.

### SUMMARY

It is therefore an object of this invention to solve at least some of the above problems and facilitate milk sampling at a farm.

According to a first aspect of the invention, this objective is achieved by a milk sampling system according to claim 1.

The milk sampling system comprises a milk sampling arrangement, which milk sampling arrangement in turn comprises a lower connection part and an upper connection part. The lower connection part, or cup as it may be referred to, is configured to temporarily store a milk sample.

The upper connection part comprises a moveable lid, configured to be removably attachable to the lower connection part, thereby forming a closed space together with the lower connection part, in a closed position; and to be separated from the lower connection part, in a separated position.

The upper connection part also comprises a milk pipe tip, connected to a milk source via a milk tube and arranged to provide milk into the lower connection part when the lid is separated from the lower connection part, via a first airgap between a lower end section of the milk pipe tip and a receiving section of the lower connection part.

The milk sampling system also comprises a milk pump, arranged to forward milk from the milk source to the milk pipe tip. The milk sampling system in addition comprises an actuator, arranged to push the lid in vertical direction, thereby attaching the lid to the lower connection part into a closed position and/ or pull the lid in vertical direction, separating the lid from the lower connection part into a separated position.

The milk sampling system comprises a controller. The controller is communicatively connected to the milk pump and the actuator. The controller is configured to, in a milk inlet supply stage: confirm, by the actuator, that the lid is separated from the lower connection part in the separated position. The controller is also configured to generate a command to the milk pump, to forward milk from the milk source to the milk pipe tip of the milk sampling arrangement when the lid is separated from the lower connection part, in the separated position.

By providing the milk to the lower connection part via the first air gap, it is assured that no liquid or substance in the lower connection part is allowed to reach the milk pipe tip. The milk in the milk source is thereby protected from contamination caused by any liquid or substance in the lower connection part.

Optionally, the milk sampling system may comprise a milk sample tube, connected to an outlet of the lower connection part, and an outlet pump, arranged to forward milk from the outlet of the lower connection part to the milk sample tube.

The milk sampling system may also comprise a milk sample inlet pump arranged to forward milk from the milk sample tube to a milk analyser, also comprised in the milk sampling system.

The milk sampling system may comprise one or several milk analysers, which may be dedicated for measuring one or several biomarker values of the milk sample received from the milk sampling arrangement.

The controller may be communicatively connected to the milk sample outlet pump and the milk sample inlet pump. The controller may be configured to, in a milk outlet stage: generate a command to the outlet pump to forward milk from the lower connection part via the outlet of the lower connection part to the milk sample tube when the milk pump has provided milk to the lower connection part. The controller may be additionally configured to generate a command to the milk sample inlet pump, to forward milk from the milk sample tube to the milk analyser.

By controlling outlet of the milk sample from the lower connection part with the pump instead of using a valve as in the state of the art, milk flow rate control and easier cleaning are achieved.

Optionally, the milk sampling system may comprise a water source comprising water and a water tube connected to the water source. The milk sampling system may also comprise a water inlet arranged to receive water from the water source via the water tube and forward the received water into the lower connection part, when the lid is separated from the lower connection part, into the separated position.

The milk sampling system may in addition comprise a water passage regulator, for example a pump or a valve, arranged to alternatingly allow or disallow water flow through the water tube from the water source to the lower connection part via the water inlet.

The controller may be communicatively connected to the water passage regulator; and configured to, in a water supply stage: confirm, by the actuator, that the lid is separated from the lower connection part in the separated position. The controller may also be configured to generate a command to the water passage regulator, to allow flow through the water tube to the lower connection part when the lid is separated from the lower connection part, in the separated position.

Optionally, the milk sampling system may comprise an air inlet, arranged in the lid, for providing pressure air into the lower connection part when the lid is attached to the lower connection part in the closed position. The milk sampling system may also comprise an air valve, arranged to alternatingly allow or disallow pressure air into the lower connection part via the air inlet.

The controller may also be communicatively connected to the air valve; and be configured to, in an air supply stage: confirm, by the actuator, that the lid is attached to the lower connection part in the closed position. The controller may also be configured to generate a command to the air valve, to allow pressure air into the lower connection part when the lid is attached to the lower connection part in the closed position.

By providing pressurised air into the lower connection part only when the lid is situated in the closed position, it becomes impossible for the increased pressure inside the closed space formed by the lower connection part and the lid to cause milk residue to accidently reach the milk pipe tip/ milk tube/ milk source.

Optionally, the milk sampling system may comprise a detergent inlet, arranged in the lower connection part, for providing detergent from a detergent source via a detergent tube, and forward the received detergent into the lower connection part. The milk sampling system may also comprise a detergent pump, arranged to forward detergent from a detergent source to the lower connection part in the detergent tube via the detergent inlet. The controller may be communicatively connected to the detergent pump; and configured to, in a detergent supply stage: generate a command to the detergent pump, to allow detergent into the lower connection part.

By providing detergent into the lower connection part, cleaning of milk residues is improved.

Optionally, the controller of the milk sampling system may be configured to clean the milk sampling arrangement, after milk analysis of the milk sample by the milk analyser, by performing: the above-described water supply stage, for cleaning the milk sampling arrangement, the milk sample tube, and the milk analyser/s; and/ or the above-described air supply stage, for pushing the supplied water around in the milk sampling arrangement.

By applying an independent cleaning program for the milk sampling arrangement/ milk sampling system which is independent from any cleaning interval of the milking equipment or milking robot, it becomes possible to clean the milk sampling arrangement/ milk sampling system between each milk sample, which reduces risks of carry-over between milk samples of different animals. Reliability of the analyses made by the milk analyser/ s is/ are thereby increased.

Optionally, the controller of the milk sampling system may be configured to clean the milk sampling arrangement, the milk sample tube, and the milk analyser/s, after milk analysis of the milk sample by the milk analyser, by performing: the above-described detergent supply stage, for cleaning the milk sampling arrangement, the milk sample tube, and the milk analyser/s together with the supplied water.

Cleaning the milk sampling arrangement by using detergent mixed with water, not merely rinsing with water, will increase efficiency of the cleaning session. Milk residues inside the lower connection part will be efficiently dissolved by the detergent.

Optionally, the controller of the milk sampling system may be configured to dry the milk sampling arrangement, the milk sample tube, and the milk analyser/s after cleaning, by performing: the above-described air supply stage, for drying the milk sampling arrangement, the milk sample tube, and the milk analyser/s.

By drying the interior of the milk sampling arrangement, the milk sample tube and/ or the milk analyser/s with added pressurised air, remaining humidity from the cleaning and/ or rinsing process is eliminated or at least reduced.

Optionally, the controller of the milk sampling system may be configured to confirm that cleaning of the milk sampling arrangement, the milk sample tube and the milk analyser/s has been performed before performing the above-described milk outlet stage of the subsequent milk sample.

Confirmation of successful cleaning before allowing to extract the next milk sample enhance trust in the test/ measurement results of the milk analyser.

Other advantages and additional novel features will become apparent from the subsequent detailed description.

### FIGURES

Embodiments of the invention will now be described in further detail with reference to the accompanying figures, in which:
- **Figure 1**: illustrates an example of a system for extracting a milk sample from a milk source, temporarily store the milk sample in a milk sampling arrangement and providing the milk sample to a milk analyser.
- **Figure 2**: illustrates an example of a milk sampling arrangement comprising a lower connection part wherein a milk sample is temporarily stored, and an upper connection part comprising a moveable lid.
- **Figure 3A**: illustrates a subsection of a milk sampling arrangement comprising milk inlet and water inlet via a moveable lid in a separated position.
- **Figure 3B**: illustrates a cross section of a subsection of a milk sampling arrangement comprising milk inlet and water inlet via a moveable lid in a separated position.
- **Figure 4A**: illustrates a subsection of a milk sampling arrangement comprising milk inlet and water inlet via a moveable lid in a closed position.
- **Figure 4B**: illustrates a cross section of a subsection of a milk sampling arrangement comprising milk inlet and water inlet via a moveable lid in a closed position.
- **Figure 5A**: illustrates a seal comprising a sealable recess, according to an embodiment, as regarded from an above view.
- **Figure 5B**: illustrates a seal comprising a sealable recess, according to an embodiment as regarded from an above view, wherein a lower end section of a milk pipe tip is penetrating the sealable recess.

### DETAILED DESCRIPTION

Embodiments of the invention described herein are defined as a milk sampling system, which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

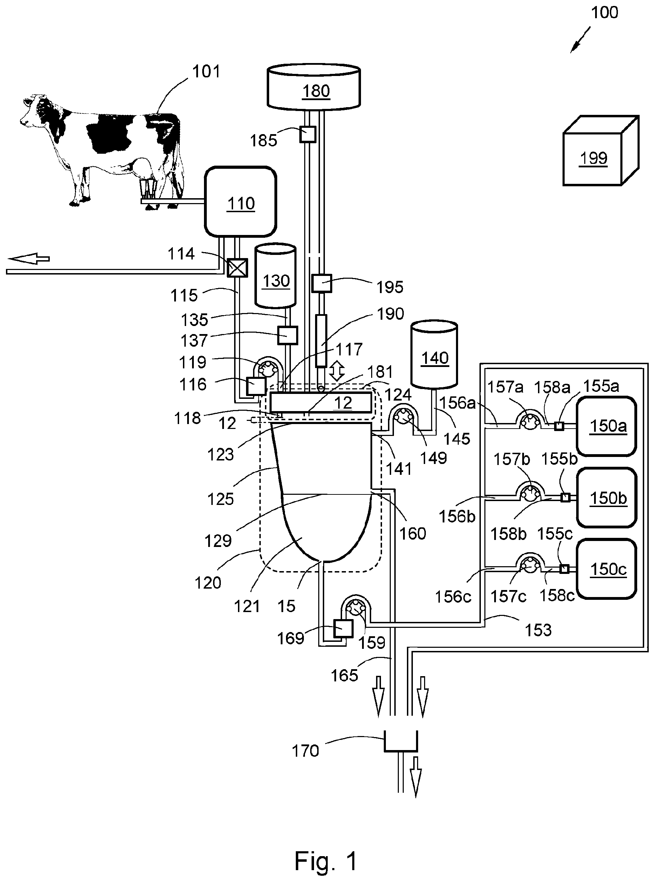

Figure 1 illustrates a milk sampling system 100 comprising a milk sampling arrangement 120 for extracting a milk sample from a milk source 110. Milk may be extracted from an animal 101 during a regular milking session and provided to the milk source 110. The milk source 110 may comprise e.g. a milk line, or a temporary (short term) milk storage.

"Animal" may be any arbitrary type of domesticated female milk producing mammal such as cow, goat, sheep, horse, camel, dromedary, dairy buffalo, donkey, reindeer, yak, lama, etc., which are kept in a herd.

Milk is extracted from the milk source 110 and provided to the milk sampling arrangement 120 via a milk tube 115. A milk sample is then temporarily stored in the milk sampling arrangement 120 and provided to one or several milk analyser/s 150a, 150b, 150c via a milk sample tube 153.

The milk sampling arrangement 120 comprises a lower connection part 121, or cup as it also may be called. The lower connection part 121 is configured to temporarily store the milk sample, during collection of the milk sample.

The milk sampling arrangement 120 also comprises an upper connection part 124. The upper connection part 124 is arranged above the lower connection part 121, in axial/ vertical direction. The upper connection part 124 may have a non-moveable structure which is fixedly mounted on the lower connection part 121, and a moveable lid 122.

The moveable lid 122 is configured to be removably attachable to the lower connection part 121, thereby forming a closed space together with the lower connection part 121, in a closed position; and/ or to be separated from the lower connection part 121, in a separated position.

The upper connection part 124 also comprises a milk pipe tip 117. The milk pipe tip 117 is connected to the milk source 110 via the milk tube 115 and arranged to provide milk into the lower connection part 121 when the lid 122 is separated from the lower connection part 121, via a first airgap 127 between a lower end section 118 of the milk pipe tip 117 and an upper rim portion 123 of the lower connection part 121. The first airgap 127 may be some millimetres, or some centimetres, for example about 5-30 mm. The milk tube 115 may comprise a rubber/ polymer hose or similar flexible material while the milk pipe tip 117 may be made of metal such as steel.

A milk valve 114 may regulate passage of milk from the milk source 110 to the milk tube 115. The milk tube 115 may also comprise a filter, for filtering out undesired particles to pass from the milk source 110 to the milk sampling arrangement 120 and the milk analyser/s 150a, 150b, 150c. In addition, the milk tube 115 may comprise an inlet sensor 116, or bubble detector, arranged on the to the milk tube 115, see Figure 1. The inlet sensor 116 may be embodied as e.g. an infrared sensor, or an ultrasonic sensor, configured to detect presence of milk and/ or water, respectively, in the milk tube 115.

Thanks to the inlet sensor 116, it could be determined whether milk is present in the milk tube 115 or not; i.e. whether a milk pump is operational or require repair/ exchange.

Milk may be forwarded by a milk pump 119, i.e. a hose pump acting on the milk tube 115 for providing milk to the lower connection part 121 via the milk pipe tip 117 and the air gap 127. The inlet sensor 116 may be situated upstream the milk pump 119.

Thanks to the first airgap 127 between the lower end section 118 of the milk pipe tip 117 and the upper rim portion 123 of the lower connection part 121, it is avoided that contaminated liquid (or in fact any liquid at all) to reach the milk pipe tip 117/ milk tube 115/ milk source 110 from the interior of the lower connection part 121 and/ or the milk analyser/ s 150a, 150b, 150c.

The milk collected in the lower connection part 121 of the milk sampling arrangement 120 may fill the lower connection part 121 up to an overflow outlet 160. Overflow milk may be evacuated from the lower connection part 121 via the overflow outlet 160 and a connected waste tube 165 to waste 170.

A predetermined volume of milk may thereby be collected in the lower connection part 121, such as for example 10-100 ml, or about 50 ml. The milk thereby creates a substantially horizontal liquid surface 129 inside the lower connection part 121. The predetermined volume of milk in the lower connection part 121 forms the milk sample/ discrete milk samples which is/ are to be provided to the milk analyser/ s 150a, 150b, 150c.

The lower connection part 121 of the milk sampling arrangement 120 comprises an outlet 151 arranged in a bottom section 210 of the lower connection part 121, for evacuating the temporarily stored milk sample from the lower connection part 121 to a milk sample tube 153. An outlet pump 159 may act on the milk sample tube 153, to forward the temporarily stored milk sample from the outlet 151 of the lower connection part 121, to the milk sample tube 153.

The outlet 151 and the milk sample tube 153 may have a diameter of about 2-4 mm, for example 2.7 mm. As the outlet pump 159 is blocking/ controlling the passage of air, the air in the milk sample tube 153 in combination with surface tension of the milk provided to the lower connection part 121 blocks the milk from flowing down the outlet 151 and the milk sample tube 153 (more than marginally), when milk is provided to the lower connection part 121 while the outlet pump 159 is deactivated.

A respective inlet section 156a, 156b, 156c of a connective tube 158a, 158b, 158c may be connected to the milk sample tube 153 and also connected to the corresponding milk analyser 150a, 150b, 150c via the connective tube 158a, 158b, 158c. A discrete milk sample inlet pump 157a, 157b, 157c may be arranged to act on a tube segment between the inlet section 156a, 156b, 156c of the connective tube, and the connective tube 158a, 158b, 158c, thereby forwarding discrete milk samples from the milk sample tube 153, to the milk analyser 150a, 150b, 150c. The tube segment may be connected to the inlet section 156a, 156b, 156c of the connective tube, and to the connective tube 158a, 158b, 158c via a connection/ joint. The tube segment may thereby be easily exchanged without changing all the tubings, or rather, different parts of the tubings may be exchanged at different periodicities.

The one or several milk analyser 150a, 150b, 150c is/ are arranged to analyse the milk sample received from the milk sampling arrangement 120.

The milk analyser/ s 150a, 150b, 150c are configured to analyse the received milk sample regarding one or several biomarkers. Different milk analysers 150a, 150b, 150c may be dedicated for analysing distinct biomarkers in some embodiments, thereby creating a more complete analysis of the extracted milk sample.

The biomarker may be e.g. progesterone, glycoprotein, oestrogen and/ or Gonadatropin-Releasing Hormones, or any other similar biomarker associated with reproduction of the animal 101 in different embodiments. The biomarker may for example indicate pregnancy of the animal 101. Progesterone is a hormone that regulates several physiological functions of the animal 101. Progesterone may prepare the uterus for pregnancy, maintain the pregnancy if fertilisation occurs, and inhibit the animal 101 from showing signs of standing oestrus and ovulating when pregnant.

Progesterone levels, for example, may rise at the beginning of the pregnancy, and be kept at a high level throughout the pregnancy of the animal 101.

The analysed biomarker may also, or alternatively be one or more of: LDH (Lactate Dehydrogenase), BHB (Beta-HydroxyButyrat), urea, somatic cell count, conductivity, fat, lactose, or a stress hormone like e.g. adrenaline, cortisol, epinephrine, norepinephrine, etc.

The moveable lid 122 is set into the separated position when milk is provided to the lower connection part 121 via the milk pipe tip 117 and the first airgap 127. Otherwise, the moveable lid 122 is set into the closed position.

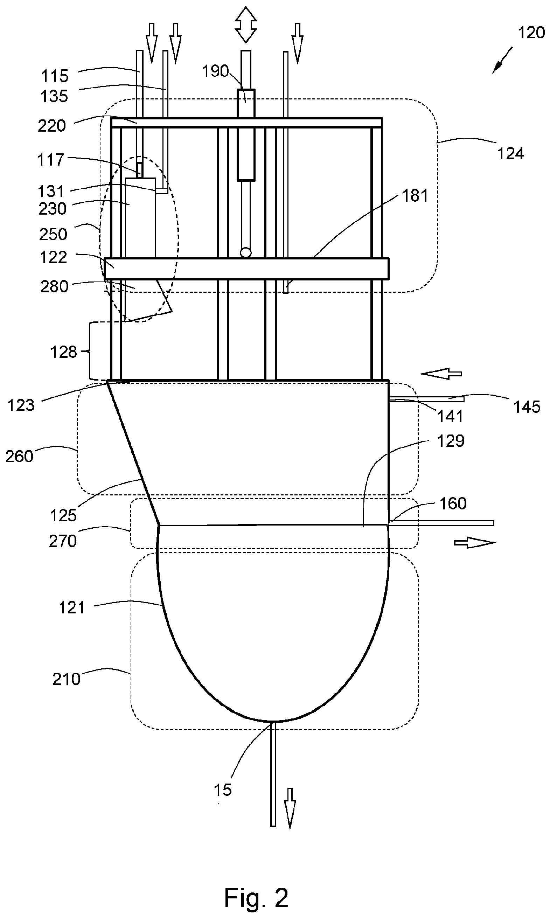

The movements of the moveable lid 122 may be made in vertical direction, i.e. a direction perpendicular to the liquid surface 129 in the lower connection part 121 when filled with liquid. The upper connection part 124 may comprise a supportive structure 220, illustrated in Figure 2, arranged to guide the moveable lid 122 between the closed position and the separated position, when an actuator 190 is caused to push/ pull the lid 122 between the closed position and the separated position.

The fit between the lower connection part 121 and the lid 122 is important for isolating the interior of the lower connection part 121 and the lid 122 in the closed position, from the exterior. By providing the supportive structure 220 with a structure to guide the lid 122 between the closed position and the separated position, and a precise fit of the lid 122 to the lower connection part 121 when set into the closed position is assured.

The actuator 190 may for example comprise a pneumatic actuator, connected to a source 180 of pressurised gas, such as air. By setting a valve/ regulator 195 on a gas line from the source 180 of pressurised gas in a first position, pressurised gas may reach a first end of the actuator 190, causing a piston of the actuator 190 to push the moveable lid 122 in substantially vertical direction into the closed position. By setting the valve 195 in a second position, pressurised gas may reach a second end of the actuator 190, causing the piston of the actuator 190 to pull the moveable lid 122 in vertical direction into the separated position.

A tubing for providing detergent/ cleaning liquid of the milking robot/ milking equipment may be attached to the milk source 110. Thereby, the milk source 110, the milk tube 115 and the milk sampling arrangement 120 and/ or milk sampling system 100 may be cleaned simultaneously with the milking robot/ milking equipment, for example every 8 hours or at some other predetermined cleaning interval.

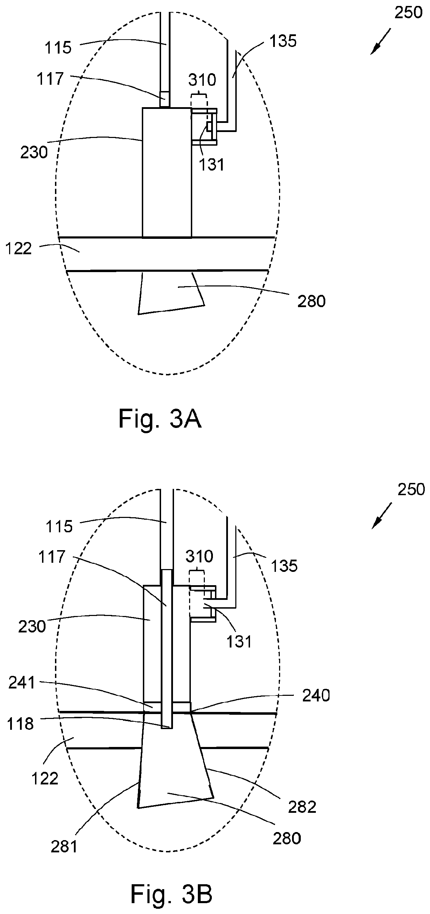

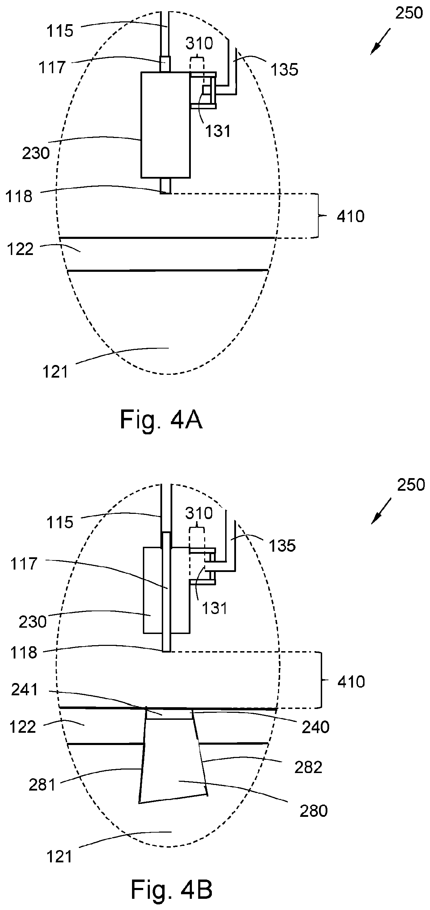

A schematical example of how for example the milk tube 115, the milk pipe tip 117, a tubular chamber 230, the moveable lid 122, a water inlet 131 may be related to and interact with each other is illustrated in Figures 3A-3B and Figures 4A-4B, respectively.

In Figure 2, a subsection 250 comprising at least some of the above enumerated features may be found. Details of this subsection 250 are illustrated in Figures 3A-3B and Figures 4A-4B. Figure 3A illustrates the subsection 250 when the moveable lid 122 is in the separated position. Figure 3B illustrates a cross section of the subsection 250 as illustrated in Figure 3A. Figure 4A illustrates the subsection 250 when the moveable lid 122 is in the closed position. Figure 4B illustrates a cross section of the subsection 250 as illustrated in Figure 4A.

The moveable lid 122 may comprise a closable entrance 240, arranged to receive passage of at least a part of the milk pipe tip 117 when the lid 122 is separated from the lower connection part 121 in the separated position, see Figures 3A-3B.

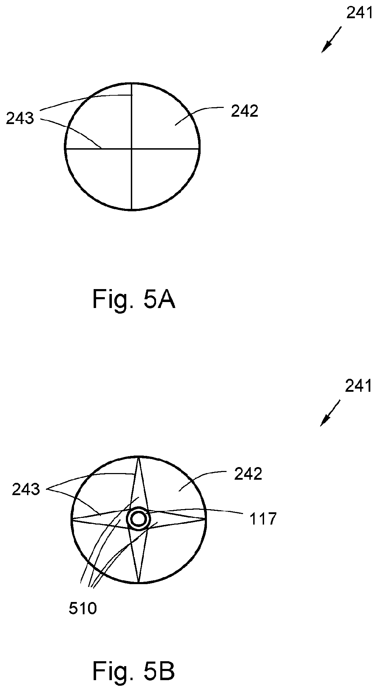

The closable entrance 240 may comprise a seal 241. The seal 241 may be constituted of a membrane 242 provided with a sealable recess 243, as may be seen in Figures 5B, illustrating the milk pipe tip 117 having penetrated the seal 241 via the sealable recess 243 in Figure 5B, as regarded from below.

By closing the closable entrance 240 with the seal 241, the milk pipe tip 117 is additionally protected from contamination caused by any liquid or substance in the lower connection part 121, not only by the first air gap 127, but also by the physical closure of the closable entrance 240 created by the seal 241, in the closed position.

The membrane 242 may be made of an elastic material such as silicon, rubber, elastomer or similar, and be replaceably fitted into the closable entrance 240 of the lid 122. The milk pipe tip 117 may be made of stainless steel or similar metallic material, to ensure successful penetration of the seal 241. Alternatively, the milk pipe tip 117 may be made of non-flexible plastic or similar relatively stiff material.

The seal 241 of the closable entrance 240 may be arranged to close the closable entrance 240 when the moveable lid 122 is attached to the lower connection part 121 in the closed position. This situation is illustrated in Figure 4A, showing the moveable lid 122 in the closed position. Figure 4B illustrates a cross section of the subsection 250 in Figure 4A.

A convenient and reliable, yet mechanically uncomplicated opening/ closure of the closable entrance 240 is thereby achieved. Another advantage is that the seal 241 may be easily exchanged, thereby avoiding consequences of material ageing of the seal 241.

The sealable recess 243 of the seal 241 may close the closable entrance 240 when the lid 122 is attached to the lower connection part 121 in the closed position. The sealable recess 243 may comprise a cross slit in some embodiments.

The lower end section 118 of the milk pipe tip 117 may then be situated above the lid 122 in the closed position of the lid 122, thereby further protecting the milk pipe tip 117 from any contamination from any liquid in the lower connection part 121.

Thus, when the moveable lid 122 is situated in the closed position, it would, in the discussed embodiment, be guaranteed that no undesired substance/ liquid of the lower connection part 121, or milk analyser 150a, 150b, 150c, to reach the milk pipe tip 117/ milk tube 115/ milk source 110.

The upper connection part 124 may comprise a hood section 280 forming part of the moveable lid 122, arranged to embrace the lower end section 118 of the milk pipe tip 117 when the moveable lid 122 is separated from the lower connection part 121, in the separated position. The hood section 280 may thereby prevent milk splash from reaching any external part of the milk sampling arrangement 120. The hood section 280 may also burst any bubbles of milk that has been created during exit of the milk pipe tip 117. The milk of the burst bubbles may then be guided via walls 281, 282 of the hood section 280 via the first airgap 127 to the receiving section 125 of the lower connection part 121.

A fourth airgap 128 may be created between a lower end of the hood section 280 and the upper rim portion 123 of the lower connection part 121 in some embodiments.

As the hood section 280 is embracing/ encircling the milk pipe tip 117 for the purpose of milk splash prevention as may be seen in Figure 3B, the fourth airgap 128 may be smaller/ shorter than the first airgap 127.

The lower connection part 121 may be divided into an upper section 260, a lower section 210, which both abuts a transition section 270, as illustrated in Figure 2.

The upper section 260 may be situated above the lower connection part 121, comprising the receiving section 125, wherein milk is received from the milk pipe tip 117 of the upper connection part 124 via the first airgap 127.

The receiving section 125 may be inclined in relation to a horizontal plane formed by the liquid surface 129 of liquid in the lower connection part 121. By receiving the milk at the inclined receiving section 125, formation of bubbles is avoided or at least reduced, as well as milk splash.

The lower section 210 may be situated at an ending of the lower connection part 121 which is distant from the upper section 260 and from the upper connection part 124. The lower section 210 may comprise the outlet 151 to the milk sample tube 153. The lower section 210 of the lower connection part 121 may have an approximately circular diameter and a rounded bottom and may be enabled to house/ temporarily store a predetermined volume of milk.

The circular diameter and the rounded bottom of the lower section 210 of the lower connection part 121 facilitate cleaning as there are less/ no corners for milk residue.

The transition section 270 between the upper section 260 and the lower section 210 of the lower connection part 121 may comprise the overflow outlet 160, for evacuating liquid via a waste tube 165 to waste 170.

The overflow outlet 160 makes the lower connection part 121 overflow when filled with liquid. The lower connection part 121 is thereby enabled to maintain a predetermined volume of liquid when filled up to overflow outlet 160.

The milk sampling arrangement 120 may also be configured for cleaning, for example between each time a milk sample is extracted from a new animal 101. Thereby, carry-over between milk samples of different animals is avoided and the result of the tests or measurements made by the milk analyser 150a, 150b, 150c will be trustworthy and reliable.

Thus, the upper connection part 124 may comprise a water inlet 131 arranged to receive water from a water source 130 via a water tube 135. The water inlet may be adjusted by a water passage regulator 137 such as e.g. a valve or pump arranged on the water tube 135. The water passage regulator 137 is arranged to alternatingly allow or disallow water flow through the water tube 135, from the water source 130 to the lower connection part 121 via the water inlet 131.

The water may then be allowed to enter the lower connection part 121 when the moveable lid 122 is separated from the lower connection part 121, in the separated position.

In some embodiments, the upper connection part 124 of the milk sampling arrangement 120 may comprise tubular chamber 230 embracing the milk pipe tip 117. The water inlet 131 may be arranged to provide the received water via a third airgap 310 to the tubular chamber 230, thereby enabling rinsing of the exterior of the milk pipe tip 117. The third air gap 310 may be seen in the cross-section illustrations of Figures 3A-3B and Figures 4A-4B. The third airgap 310 may be created by fixating the water tube 135 with a structure, holding the end section 131 of the water tube 135 at the distance of the third airgap 310 to the tubular chamber 230. The distance of the third airgap 310 may be some millimetres, or some few centimetres.

The third airgap 310 protects the water tube 135 and the water source 130 from any contamination caused by any liquid or substance.

Hereby, the water, when the water inlet regulator 137 is set into a position allowing water to pass through the water tube 135 and flush the exterior of the milk pipe tip 117, when the lid 122 is situated in the separated position.

By rinsing the exterior of the milk pipe tip 117 with water, any milk residues outside of the milk pipe tip 117 is efficiently removed, thereby eliminating, or at least reducing risks of carry-over between milk samples of different animals.

The water is then also allowed to enter the lower connection part 121 by passing the closable entrance 240. In embodiments wherein the seal 241 is provided in the closable entrance 240, the water may then be allowed to pass the sealable recess 243 of the membrane 242, when the lid 122 is separated from the lower connection part 121, via the first airgap 127 between the lower end section 118 of the milk pipe tip 117 and the upper rim portion 123 of the lower connection part 121. The end section 118 of the milk pipe tip 117 then penetrates the cross slit of the sealable recess 243 of the membrane 242, as illustrated in Figure 3B (from the side) and figure 5B (from below). The milk pipe tip 117 then opens and disforms the edges of the cross slit, whereby the created openings 510 which allow for water to enter the lower connection part 121.

The first airgap 127 adds an additional obstruction, protecting the water tube 135 and the water source 130 from any contamination caused by any liquid or substance in the lower connection part 121.

In embodiments wherein the upper connection part 124 of the milk sampling arrangement 120 comprises the tubular chamber 230 embracing the milk pipe tip 117, the seal 241 of the closable entrance 240 may be arranged to form a sealing surface against an end section of the tubular chamber 230.

The milk sampling arrangement 120 may also comprise a detergent inlet 141. The detergent inlet 141 may be comprised in the lower connection part 121 of the milk sampling arrangement 120, preferably in an upper section 260 of the lower connection part 121. However, in some alternative embodiments, the detergent inlet 141 may be comprised in the upper connection part 124.

The detergent inlet 141 may be arranged for providing detergent from a detergent source 140 via a detergent tube 145 into the lower connection part 121 when the lid 122 is attached to the lower connection part 121 in the closed position.

By providing detergent into the lower connection part 121 only when the lid 122 is situated in the closed position, it is avoided that the detergent inside the closed space formed by the lower connection part 121 and the lid 122 reach the milk pipe tip 117/ milk tube 115/ milk source 110.

However, the detergent may be applied into the lower connection part 121 when the lid 122 is situated in the separate position, thereby saving the time it takes to activate the actuator 190 to push the lid 122 into the closed position before applying the detergent.

It is impossible for the detergent to reach the milk pipe tip 117 and/ or the milk tube 115 and/ or the milk source 110, due to the first airgap 127 between the lower end section 118 of the milk pipe tip 117 and the upper rim portion 123 of the lower connection part 121.

Cleaning the milk sampling arrangement 120 by using detergent mixed with water, not merely rinsing with water, will increase efficiency of the cleaning session. Milk residues inside the lower connection part 121 will be efficiently dissolved by the detergent. However sometimes a rinsing of the milk sampling arrangement 120 with hot/ cold/ luke-warm water between each animal may be sufficient.

The milk sampling arrangement 120 may comprise an air inlet 181. The air inlet 181 may be comprised in the upper connection part 124, for example in the lid 122. The air inlet 181 may be arranged to provide pressure air into the lower connection part 121 when the lid 122 is attached to the lower connection part 121 in the closed position. Alternatively, the air inlet 181 may be comprised in the lower connection part 121, for example in the upper section 260 of the lower connection part 121.

However, by providing pressurised air into the lower connection part 121 only when the lid 122 is situated in the closed position, it is avoided that the increased pressure inside the closed space formed by the lower connection part 121 and the lid 122 to cause milk residue to accidently reach the milk pipe tip 117/ milk tube 115/ milk source 110.

The pressurised air may be applied during cleaning, for example for pushing a mixture of water and detergent around in the lower connection part 121, or possibly only water, thereby scrubbing off milk residue and/ or dirt in the lower connection part 121.

By providing the lower section 210 of the lower connection part 121 with an approximately circular diameter and a rounded bottom, the pressurised air is enabled to bring the water/ detergent mixture into rotation inside the lower connection part 121, thereby efficiently removing any milk residue and/ or dirt.

A general principle of the functionality of the disclosed milk sampling arrangement 120 and the milk sampling system 100 is that milk (and water) is/ are only allowed to enter the lower connection part 121 when the lid 122 is separated from the lower connection part 121, in the separated position. Detergent may be applied into the lower connection part 121 either when the lid 122 is separated from the lower connection part 121, in the separated position or alternatively when the lid 122 is attached to the lower connection part 121 in the closed position. Pressurised air is only allowable/ possible when the lid 122 is attached to the lower connection part 121, thereby forming a closed space between the lid 122 and the lower connection part 121.

It is thereby avoided that e.g. detergent or milk residues in the lower connection part 121 will reach the milk source 110 or the milk pipe tip 117, as the lower end section 118 of the milk pipe tip 117 is above the lid 122 with a second airgap when the lid 122 is attached to the lower connection part 121 in the closed position. The second airgap is illustrated in Figure 4A-4B.

A cleaning procedure may be performed regularly, for example between each animal to be sampled. Alternatively, a rinsing with water may be made between each milk sample/ animal to be tested and a more complete cleaning may be performed at a regular time interval, such as every 1-8 hours, e.g. every 4 hours.

When it has been confirmed that an analysis of the provided discrete milk sample/s has/ have been performed by the milk analyser 150a, 150b, 150c, the cleaning procedure may be initialised.

By applying an independent cleaning procedure for the milk sampling arrangement 120/ milk sampling system 100 which is independent from any cleaning interval of the milking equipment or milking robot, it becomes possible to clean the milk sampling arrangement 120/ milk sampling system 100 between each milk sample, which reduces risks of carry-over between milk samples of different animals. Reliability of the analyses made by the milk analyser/s 150a, 150b, 150c is/ are thereby increased.

The cleaning procedure may start with evacuating any remaining milk from the lower connection part 121 by running the outlet pump 159, acting on the milk sample tube 153, for forwarding the milk to waste 170. This step may be performed when the lid 122 is in the closed position.

The lid 122 may then be set into the separated position while setting the water passage regulator 137 in a position allowing water flow through the water tube 135 from the water source 130 to the lower connection part 121 via the water inlet 131, possibly until water is flowing out of the overflow outlet 160, to waste 170.

In some embodiments, detergent may be added to the lower connection part 121 by activating the detergent pump 149, arranged to forward detergent from the detergent source 140 via the detergent tube 145 and the detergent inlet 141 to the lower connection part 121 while the lid 122 is set into the separated position; or alternatively when the lid 122 is in the closed position. The detergent and the water may thereby be mixed in the lower connection part 121.

The lid 122 may then be set into the closed position, forming a closed space together with the lower connection part 121, comprising the water and/ or detergent.

Pressurised air may then be allowed to enter the closed space formed by the lid 122 and the lower connection part 121. The air valve 180 may then be set into a position allowing pressure air into the lower connection part 121 via the air inlet 181 when the lid 122 is in the closed position. The pressure air then pushes the water and/ or water/ detergent mixture around inside the lower connection part 121, washing away any milk residues, dirt, or other undesired matter. The pressurised air of the air valve 180 may thus be used for stirring the water and/ or water/ detergent mixture around in the lower connection part 121, rather than pushing the water and/ or water/ detergent mixture through the milk sample tube 153, or any other tube directly or indirectly connected to the lower connection part 121 for that matter.

The water and/ or water/ detergent mixture may thereafter be evacuated from the lower connection part 121 via the outlet 151 in the bottom section 210 of the lower connection part 121, to waste 170, via the milk sample tube 153, by activation of the outlet pump 159, while the lid 122 is situated in the closed position.

While the moveable lid 122 remains in the closed position, pressure air may be allowed to again enter the closed space formed by the lower connection part 121 and the lid 122, for drying the interior of the lower connection part 121.

By drying the interior of the lower connection part 121 with the pressure air, remaining liquid droplets from the cleaning and/ or rinsing process may be evacuated, or at least humidity may be somewhat reduced. The possibility or risk for carry over is additionally reduced.

In some embodiments, a confirmation that successful cleaning of the milk sampling arrangement 120 has been performed may be made, before allowing to extract a new milk sample from the next animal. Confirmation of successful cleaning before allowing to extract the next milk sample enhance trust in the test/ measurement results of the milk analyser 150a, 150b, 150c. The confirmation may be made by a controller 199 comprised in the milk sampling system 100. The controller 199 may be communicatively connected to various components of the milk sampling system 100 for example the outlet pump 159, the milk pump 119, one or several discrete milk sample inlet pump/s 157a, 157b, 157c, an outlet sensor 169 arranged on the to the milk sample tube 153, and/ or the inlet sensor 116 arranged on the milk tube 115, see Figure 1.

The outlet sensor 169 may be embodied as e.g. an infrared sensor, and/ or an ultrasonic sensor configured to detect presence of milk and/ or water, respectively, in the milk sample tube 153.

The controller 199 may activate the outlet pump 159 for evacuating any content of the lower connection part 121 to the milk sample tube 153. In case the cleaning has been successful and the interior of the lower connection part 121 has been successfully dried with pressurised air, no liquid will pass the outlet sensor 169 on the milk sample tube 153.

The controller 199 may be configured to obtain measurements of the outlet sensor 169 and detect presence of milk and/ or water, respectively, in the milk sample tube 153 and/ or obtain measurements of the inlet sensor 116 in the milk tube 115, for detecting presence of milk and/ or water in the milk tube 115.

By obtaining the measurement, e.g. an infrared measurement from the outlet sensor 169, it may be confirmed that the lower connection part 121 does not comprise any remaining liquid, i.e. that successful cleaning of the lower connection part 121 has been made.

Measurements of the outlet sensor 169 may also be obtained and used to determine that milk is actually passing the outlet pump 159 and the milk sample tube 153 when expected, in order to be able to provide discrete milk samples to be obtained by the milk analyser 150a, 150b, 150c, when a command previously has been generated to the outlet pump 159 to forward milk comprised in the lower connection part 121 to the milk sample tube 153.

In case the measurement of the outlet sensor 169 does not confirm presence of milk in the milk sample tube 153 despite it would be expected, there may be some malfunction, for example dysfunctional outlet pump 159 or leakage on the milk sample tube 153. The controller 199 may then generate and send an alert to be received by an operator, to come and check the equipment.

The alert may be provided to an output unit of the operator, such as for example a cellular mobile telephone, a stationary or portable computing device, a smart watch or similar device having a user interface and wireless communication ability.

Thereafter, the moveable lid 122 may be separated from the lower connection part 121 and set into the separated position. When a milk sample is to be extracted from a new animal, milk from that animal may be used to rinse the milk tube 115 and the milk pipe tip 117 dedicated for forwarding milk from the milk source 110 to the milk sampling arrangement 120.

This may be performed by, when having confirmed that the lid 122 is separated from the lower connection part 121 in the separated position, forwarding milk from the milk source 110 to the milk pipe tip 117 of the milk sampling arrangement 120.

The milk sample tube 153 may also be rinsed with milk from the animal from which the next milk sample is to be taken. The milk may be evacuated from the lower connection part 121 via the outlet 151 by activating the outlet pump 159 for forwarding the milk from the outlet 151 via the milk sample tube 153 to the waste 170.

The controller 199 may be communicatively connected to various other parts of the milk sampling system 100, such as for example the milk pump 119, the actuator 190, the outlet pump 159, the discrete milk sample inlet pump/s 157a, 157b, 157c, the milk analyser/s 150a, 150b, 150c, the water passage regulator 137, the air valve 180, the detergent pump 149, the outlet sensor 169, arranged on the milk sample tube 153 upstream the outlet pump 159, a connective tube sensor 155a, 155b, 155c, arranged on the connective tube 158a, 158b, 158c, for example.

The controller 199 may comprise one or more instances of a processing circuit i.e. a Central Processing Unit (CPU), an Application Specific Integrated Circuit (ASIC), a microprocessor, or other processing logic that may interpret and execute instructions. The processing circuit is configured for performing various calculations for conducting the described procedures for providing the milk sample to the milk analyser 150a, 150b, 150c; and/ or performing the cleaning of the milk sampling arrangement 120.

The controller 199 may comprise a memory in some embodiments. The optional memory may comprise a physical device utilised to store data or programs, i.e., sequences of instructions, on a temporary or permanent basis. According to some embodiments, the memory may comprise integrated circuits comprising silicon-based transistors. The memory may comprise e.g., a memory card, a flash memory, a USB memory, a hard disc, or another similar volatile or non-volatile storage unit for storing data such as e.g., ROM (Read-Only Memory), PROM (Programmable Read-Only Memory), EPROM (Erasable PROM), EEPROM (Electrically Erasable PROM), etc. in different embodiments.

The controller 199 may be configured to generate a command to the milk pump 119, to forward milk from the milk source 110 to the milk pipe tip 117 of the milk sampling arrangement 120 when the milk sample is to be taken from the animal 101. The controller 199 may be configured to generate a command to the outlet pump 159 to forward milk from the lower connection part 121 via the outlet 151 of the lower connection part 121 to the milk sample tube 153 when the milk pump 119 has provided milk to the lower connection part 121. The controller 199 may be configured to generate a command to the discrete milk sample inlet pump 157a, 157b, 157c, to forward milk from the milk sample tube 153 to be provided to the milk analyser 150a, 150b, 150c via the connective tube 158a, 158b, 158c.

In some embodiments, the controller 199 may be configured to generate a command to the actuator 190 to separate the lid 122 from the lower connection part 121 into the separated position and generate a command to the milk pump 119, to forward milk from the milk source 110 to the milk pipe tip 117 of the milk sampling arrangement 120 when the lid 122 is separated from the lower connection part 121, in the separated position. The controller 199 may thereafter generate a command to the actuator 190, to push the lid 122, thereby attaching the lid 122 to the lower connection part 121 into the closed position. The controller 199 may in addition generate a command to the outlet pump 159 to forward milk from the lower connection part 121 via the outlet 151 of the lower connection part 121 to the milk sample tube 153 when the milk pump 119 has provided milk to the lower connection part 121 and the lid 122 is attached to the lower connection part 121 into the closed position. The controller 199 may also generate a command to the discrete milk sample inlet pump 157a, 157b, 157c, to forward milk from the milk sample tube 153 to the milk analyser 150a, 150b, 150c via the connective tube 158a, 158b, 158c.

The controller 199 may in addition be configured to generate a command to the discrete milk sample inlet pump 157a, 157b, 157c, to forward discrete milk sample from the milk sample tube 153 to the milk analyser 150a, 150b, 150c, only when the measurement of the outlet sensor 169 on the milk sample tube 153 confirms that milk is present in the milk sample tube 153.

The controller 199 may also be configured to obtain a measurement of the connective tube sensor 155a, 155b, 155c, or bubble detector, and detect presence of discrete milk sample in the milk connective tube 158a, 158b, 158c between the milk sample tube 153 and the milk analyser 150a, 150b, 150c.

The connective tube sensor 155a, 155b, 155c may alternatively be referred to as a bubble detector and may comprise e.g. an infrared sensor or an ultrasonic sensor, for example, configured to detect presence of milk and/ or water, respectively, in the milk connective tube 158a, 158b, 158c wherein the sensor 155a, 155b, 155c is applied.

It may hereby be assured that the discrete milk sample inlet pump 157a, 157b, 157c is operational and/ or the connective tube 158a, 158b, 158c is not leaking. By instantly detecting a defect of the discrete milk sample inlet pump 157a, 157b, 157c and/ or leakage of the connective tube 158a, 158b, 158c, a fast repair/ replacement may be made, which decreases down-time of the milk sampling system 100.

The connective tube sensor 155a, 155b, 155c may be placed on the connective tube 158a, 158b, 158c either upstream the discrete milk sample inlet pump 157a, 157b, 157c, i.e. at the inlet section 156a, 156b, 156c of the connective tube, or downstream the discrete milk sample inlet pump 157a, 157b, 157c in different embodiments.

When milk is provided to the milk sample tube 153 by activation of the outlet pump 159, the pump pressure provides milk to the respective inlet section 156a, 156b, 156c of the connective tube 158a, 158b, 158c.

In case no discrete milk sample is to be provided to the milk analyser 150a, 150b, 150c, the corresponding discrete milk sample inlet pump 157a, 157b, 157c is not activated and thereby blocks milk from reaching the milk analyser 150a, 150b, 150c.

In the opposite case, when the discrete milk sample is to be provided to the milk analyser 150a, 150b, 150c, the corresponding discrete milk sample inlet pump 157a, 157b, 157c is activated, thereby forwarding milk from the milk sample tube 153 via the inlet section 156a, 156b, 156c of the connective tube 158a, 158b, 158c towards the milk analyser 150a, 150b, 150c. The connective tube sensor 155a, 155b, 155c, when situated at the inlet section 156a, 156b, 156c of the connective tube, may detect when a milk front of milk passes the inlet section 156a, 156b, 156c of the connective tube 158a, 158b, 158c, at the position of the connective tube sensor 155a, 155b, 155c. Precision dosage of the discrete milk sample to be provided to the corresponding milk analyser 150a, 150b, 150c could thereby be made by the operation of the discrete milk sample inlet pump 157a, 157b, 157c.

During washing of the milking robot/ milking equipment, the connective tube sensor 155a, 155b, 155c may be used to check that detergent and/ or rinse is provided, and/ or to generate and send an alert if it does not (due to e.g. leakage, congestion in tubings, malfunctioning pumps/ valves, no remaining detergent in detergent container of the milking robot, etc.).

The various operations of the controller 199 for extracting the milk sample from the milk source 110 and provide it to the milk sample tube 153; to clean the milk sampling arrangement 120; to operate the moveable lid 122 between the closed position and the separated position; to activate/ disactivate the discrete milk sample inlet pump 157a, 157b, 157c etc., may be performed by a computer program product. The computer program product may comprise instructions which, when the program is executed by a computer, cause the computer to carry out any one of the previously described operations.

The computer program product mentioned above may be stored on a computer-readable storage medium i.e. a data carrier comprising instructions which, when executed by a computer, cause the computer to carry out any one of the previously described operations when being loaded into one or more processing circuits of the controller 199. The computer-readable storage medium/ data carrier may be embodied, e.g., a hard disk, a CD ROM disc, a memory stick, an optical storage device, a magnetic storage device or any other appropriate medium such as a disk or tape that may hold machine readable data in a non-transitory manner. The computer program may furthermore be provided as computer pro-gram code on a server and downloaded to the controller 199 remotely, e.g. over an Internet or an intra-net connection.

The milk sampling system 100 may comprise a database communicatively connected to the controller 199 and/ or the milk analyser 150a, 150b, 150c, wherein information concerning the animal 101, which milk has been analysed, and the analysed biomarker may be stored.

The result of the biomarker analysis may be used for automated status/ disease monitoring concerning health of the animals, assisting the farmer in early identification of disease risks and/ or dysfunctional animals; or for timing insemination for example. Thereby the farmer may take appropriate action for directly or indirectly increase milk yield at the farm, for example by early detection, isolation and treatment of sick animals.

By extracting the milk sample automatically during milking of the animal 101 and make the milk analysis automatically and continuously, the farmer achieve a good control of animal status in the herd, while saving working time. He/ she is thereby enabled to focus on other more urgent needs at the farm, such as e.g. treating of sick animals or assist in a delivery of calves.

In some embodiments, a method may be used for calculating milk flow rate through the outlet pump 159 when running on a certain rotational speed, based on knowledge of the amount of liquid that is filled to and maintained in the lower connection part 121 before overflowing via the overflow outlet 160. As the milk volume is known and the rotational speed of the outlet pump 159 is constant, the milk flow rate of the outlet pump 159 could be calculated by determining the time it takes for the outlet pump 159 to empty the lower connection part 121.

This information may be used for calibrating the milk flow rate of the milk pump 119 against the calculated milk flow rate of the outlet pump 159.

The milk pump 119 and the outlet pump 159 may be hose pumps of the same type, size and capacity. Thus, it could be assumed that the milk flow rate of the milk pump 119 is the same, within a threshold limit, as the calculated milk flow rate of the outlet pump 159.

In case there is a deviation in milk flow rate between the milk pump 119 and the outlet pump 159, an adjustment of the activation time of the milk pump 119 for forwarding a certain volume of milk to the lower connection part 121 may be made.

Hereby, the desired volume of milk could be forwarded by the milk pump 119 to the lower connection part 121, also when the milk flow rate of the milk pump 119 is different from the milk flow rate of the outlet pump 159.

A possible cause for a deviation in milk flow rate over time between the milk pump 119 and the outlet pump 159, although the respective milk flow rates initially may be identical as the milk pump 119 and the outlet pump 159 are of the same type, size and capacity may be that cleaning intensity of the milk tube 115 and the milk sample tube 153 are different.

The milk tube 115 may be cleaned together with the milking robot/ milking equipment at some few occasions per day while the milk sample tube 153 may be cleaned and/ or rinsed with water between every milk sample or animal.

The involved hoses of the milk tube 115 and/ or the milk sample tube 153 will undergo a chemical reaction or aging over time, due to the exposure of the milk. The flexibility of the hoses may then deteriorate over time, i.e. the hoses become stiffer, which will affect the efficiency of the milk pump 119, and/ or the outlet pump 159 when acting on the respective hoses. As the milk tube 115 (acted upon by the milk pump 119) is more exposed to milk than the milk sample tube 153 (acted upon by the outlet pump 159) due to the differences in cleaning intensity, milk flow rate of the milk pump 119 may deteriorate faster than for the outlet pump 159.

The difference in milk flow rate over time between the milk pump 119 and the outlet pump 159 may also be used for determining that it is time to change hoses, i.e. when the difference in milk flow rate exceeds a flow rate threshold limit, an alert may be generated triggering a hose change.

An advantage by applying a performance-based measure for exchanging milk hoses, instead of applying a time-based exchange scheme, is that exchange intervals could be increased, yet full control of the deterioration of the hoses is achieved.

The milk pump 119 and/ or the outlet pump 159 may have a respective special hose section that is/ are connected to the milk tube 115 and/ or the milk sample tube 153, respectively via a connection/ fitting. By only changing the special hose sections that the milk pump 119 and/ or the outlet pump 159 are acting on, less material has to be exchanged, which saves resources. The other sections of the milk tube 115 and/ or the milk sample tube 153 may also be exchanged, but on an extended time interval, as the deterioration of the other sections of the milk tube 115 and/ or the milk sample tube 153 that are not acted upon by the milk pump 119/ outlet pump 159 respectively are not critical for the milk flow rate of the milk pump 119/ outlet pump 159.

In a first step when performing the method, the lower connection part 121 may be filled up to overflow via the overflow outlet 160, by activation of the milk pump 119. The lower connection part 121 then comprises the predetermined volume of milk as previously discussed, for example 50 ml.

The predetermined volume of milk may then be evacuated from the lower connection part 121 by activation of the outlet pump 159. By measurements obtained from the outlet sensor 169 on the milk sample tube 153, it may be determined that all milk has been evacuated from the lower connection part 121. The milk flow rate of the milk passing the outlet pump 159 when evacuating the predetermined volume of milk from the lower connection part 121 may then be calculated, based on knowledge of the rotational speed of the outlet pump 159, the operational time of the outlet pump 159 for evacuating the milk, and the evacuated predetermined volume of milk.

As the physical hose pumps used for embodying the milk pump 119 and the outlet pump 159, may be of the same type, the same milk flow rate through the milk pump 119 as for the outlet pump 159 may be assumed.

It may thereby be possible to provide the lower connection part 121 with a second volume of milk, which is smaller than the predetermined volume of milk. For example, the second volume of milk may be 30 ml when the predetermined volume of milk is 50 ml. The second volume of milk is provided by activation of the milk pump 119 at the predetermined rotational speed for a time period which is calculated based on the calculated milk flow rate of milk passing the outlet pump 159 and the preliminary assumption that the milk flow rate of the milk pump 119 is identical with the calculated milk flow rate of milk passing the outlet pump 159.

The milk in the lower connection part 121 may then be evacuated by activation of the outlet pump 159 at the predetermined rotational speed. By obtaining a second measurement of the outlet sensor 169, indicating absence of milk in the milk sample tube 153, it could be determined when all the milk in the lower connection part 121 has been evacuated.

As the milk flow rate of the outlet pump 159 already has been determined, the rotational speed of the outlet pump 159 is determined and constant, and the operational time of the outlet pump 159 could be calculated as the time period between activation of the outlet pump 159 and the second measurement of the outlet sensor 169, indicating absence of milk in the milk sample tube 153, the evacuated actual volume of milk could be determined.

It could then be determined whether the milk flow rate of the milk pump 119 is identical with the milk flow rate of the outlet pump 159 or not by comparing the second volume of milk, provided by the milk pump 119 to the lower connection part 121 under the preliminary assumption that the milk flow rate of the milk pump 119 is identical with the determined milk flow rate of milk passing the outlet pump 159; with the volume of milk actually evacuated from the lower connection part 121 by the outlet pump 159.

In case the second volume of milk provided by the milk pump 119 is identical with the volume of milk evacuated by the outlet pump 159, within a volume threshold limit, it is confirmed that the milk flow rate of the milk pump 119 is the same as the milk flow rate of the outlet pump 159.

In case of a deviation between the second volume of milk provided by the milk pump 119 and the volume of milk evacuated by the outlet pump 159, exceeding the volume threshold limit, an adjustment of the running time of the milk pump 119 has to be made, compensating for the deteriorated milk flow rate of the milk pump 119, in order to forward a desired volume of milk.

There are several general advantages provided by using a pump instead of a plurality of valves for directing milk, water, and/ or detergent, respectively, into/ out from the lower connection part 121; and/ or to the milk analyser/s 150a, 150b, 150c.

In case of using valves instead of pumps, a closable valve would have to be provided in the respective inlet section 156a, 156b, 156c and also in the milk sample tube 153 after the first inlet section 156c to the first milk analyser 150c, another closable valve in the milk sample tube 153 after the second inlet section 156b to the second milk analyser 150b, etc., which means twice as many components as when using pumps.

When using pumps, it is possible to determine milk flow rate of milk passing the tubing on which the pump is acting, in an accurate way. This is not possible when valves are used.

By using the discrete milk sample inlet pumps 157a, 157b, 157c for forwarding milk to the respective milk analyser/s 150a, 150b, 150c instead of valves, the outlet pump 159 does not have to deliver as high pressure to be sure to get the milk into the milk analyser/s 150a, 150b, 150c as would have been required if valves would have been used, i.e. a bigger/ higher capacity outlet pump 159 would have been required. Also, precision of milk dosage provided to the respective milk analyser/s 150a, 150b, 150c would not be as precise with the bigger outlet pump 159, i.e. in case valves would have been used for controlling the inlet to the respective milk analyser/s 150a, 150b, 150c.

In addition, repeated communication back and forth between the milk analyser/s 150a, 150b, 150c and the controller 199 would be needed to ascertain that milk actually is available and could be obtained by the milk analyser/s 150a, 150b, 150c, in case valves would be used. When using the discrete milk sample inlet pumps 157a, 157b, 157c only one communication may be made, for confirming that milk is available in the milk sample tube 153.

The embodiments, or parts thereof, illustrated in Figure 1, Figure 2, Figure 3A, Figure 3B, Figure 4A, Figure 4B, Figure 5A and/ or Figure 5B may with advantage be combined with each other for achieving further benefits.

The terminology used in the description of the embodiments as illustrated in the accompanying drawings is not intended to be limiting of the described milk sampling system 100, milk sampling arrangement 120, controller 199, and/ or computer program. Various changes, substitutions and/ or alterations may be made. The scope of the invention is defined by the appended claims.

As used herein, the term "and/ or" comprises any and all combinations of one or more of the associated listed items. The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processor may fulfil the functions of several items recited in the claims. The mere fact that certain measures or features are recited in mutually different dependent claims, illustrated in different figures or discussed in conjunction with different embodiments does not indicate that a combination of these measures or features cannot be used to advantage. A computer program may be stored/ distributed on a suitable medium, such as an optical storage medium or a solid-state medium supplied together with or as part of other hardware but may also be distributed in other forms such as via Internet or other wired or wireless communication system.

## Claims

1. A milk sampling system (100) comprising
a milk sampling arrangement (120), comprising
a lower connection part (121), configured to temporarily store a milk sample;
an upper connection part (124), comprising
a moveable lid (122), configured
to be removably attachable to the lower connection part (121), thereby forming a closed space together with the lower connection part (121), in a closed position; and
to be separated from the lower connection part (121), in a separated position; and
a milk pipe tip (117), connected to a milk source (110) via a milk tube (115) and arranged to provide milk into the lower connection part (121) when the lid (122) is separated from the lower connection part (121), via a first airgap (127) between a lower end section (118) of the milk pipe tip (117) and an upper rim portion (123) of the lower connection part (121);
a milk pump (119), arranged to forward milk from the milk source (110) to the milk pipe tip (117);
an actuator (190), arranged to push the lid (122) in vertical direction, thereby attaching the lid (122) to the lower connection part (121) into a closed position and/ or pull the lid (122) in vertical direction, thereby separating the lid (122) from the lower connection part (121) into a separated position;
a controller (199), communicatively connected to the milk pump (119) and the actuator (190) and wherein the controller (199) is configured to, in a milk inlet supply stage:
confirm, by the actuator (190), that the lid (122) is separated from the lower connection part (121) in the separated position;
generate a command to the milk pump (119), to forward milk from the milk source (110) to the milk pipe tip (117) of the milk sampling arrangement (120) when the lid (122) is separated from the lower connection part (121), in the separated position.

2. The milk sampling system (100) according to claim 1, comprising:
a milk sample tube (153), connecting an outlet (151) of the lower connection part (121);
an outlet pump (159), arranged to forward milk from the outlet (151) of the lower connection part (121) to the milk sample tube (153);
a discrete milk sample inlet pump (157a, 157b, 157c) arranged to forward milk from the milk sample tube (153), to a milk analyser (150a, 150b, 150c);
the milk analyser (150a, 150b, 150c), arranged to analyse the received milk sample; wherein the controller (199) is communicatively connected to the outlet pump (159) and the discrete milk sample inlet pump (157a, 157b, 157c); and wherein the controller (199) is configured to, in a milk outlet stage:
generate a command to the outlet pump (159) to forward milk from the lower connection part (121) via the outlet (151) of the lower connection part (121) to the milk sample tube (153) when the milk pump (119) has provided milk to the lower connection part (121); and
generate a command to the discrete milk sample inlet pump (157a, 157b, 157c), to forward milk from the milk sample tube (153) to the milk analyser (150a, 150b, 150c).

3. The milk sampling system (100) according to any one of claim 1 or claim 2, comprising:
a water source (130) comprising water;
a water tube (135) connected to the water source (130);
a water inlet (131) arranged to receive water from the water source (130) via the water tube (135), and forward the received water into the lower connection part (121), when the lid (122) is separated from the lower connection part (121), into the separated position;
a water passage regulator (137), arranged to alternatingly allow or disallow water flow through the water tube (135) from the water source (130) to the lower connection part (121) via the water inlet (131); wherein the controller (199) is communicatively connected to the water passage regulator (137); and configured to, in a water supply stage:
confirm, by the actuator (190), that the lid (122) is separated from the lower connection part (121) in the separated position; and
generate a command to the water passage regulator (137), to allow flow through the water tube (135) to the lower connection part (121) when the lid (122) is separated from the lower connection part (121), in the separated position.

4. The milk sampling system (100) according to any one of claims 1-3, comprising:
an air inlet (181), arranged in the lid (122), for providing pressure air into the lower connection part (121) when the lid (122) is attached to the lower connection part (121) in the closed position;
an air valve (180), arranged to alternatingly allow or disallow pressure air into the lower connection part (121) via the air inlet (181); wherein the controller (199) is communicatively connected to the air valve (180); and configured to, in an air supply stage:
confirm, by the actuator (190), that the lid (122) is attached to the lower connection part (121) in the closed position; and
generate a command to the air valve (180), to allow pressure air into the lower connection part (121) when the lid (122) is attached to the lower connection part (121) in the closed position.

5. The milk sampling system (100) according to any one of claims 1-4, comprising
a detergent inlet (141), arranged in the lower connection part (121), for providing detergent from a detergent source (140) via a detergent tube (145), and forward the received detergent into the lower connection part (121); and
a detergent pump (149), arranged to forward detergent from a detergent source (140) to the lower connection part (121) in the detergent tube (145) via the detergent inlet (141); wherein the controller (199) is communicatively connected to the detergent pump (149); and configured to, in a detergent supply stage:
generate a command to the detergent pump (149), to allow detergent into the lower connection part (121).

6. The milk sampling system (100) according to claim 3 and any one of claims 4 or 5 wherein the controller (199) is configured to clean the milk sampling arrangement (120), after milk analysis of the milk sample by the milk analyser (150a, 150b, 150c), by performing:
the water supply stage according to claim 3, for cleaning the milk sampling arrangement (120), the milk sample tube (153) and the milk analyser/s (150a, 150b, 150c).

7. The milk sampling system (100) according to claims 5 and 6 6, wherein the controller (199) is configured to clean the milk sampling arrangement (120), after milk analysis of the milk sample by the milk analyser (150a, 150b, 150c), by performing:
the detergent supply stage according to claim 5, for cleaning the milk sampling arrangement (120), the milk sample tube (153) and the milk analyser/s (150a, 150b, 150c) together with the supplied water.

8. The milk sampling system (100) according to claim 4 and any one of claim 6 or claim 7, wherein the controller (199) is configured to dry the milk sampling arrangement (120) the milk sample tube (153) and the milk analyser/s (150a, 150b, 150c) after cleaning, by performing:
the air supply stage according to claim 4, for drying the milk sampling arrangement (120), the milk sample tube (153) and the milk analyser/s (150a, 150b, 150c).

9. The milk sampling system (100) according to claim 2 and any one of claims 6-8, wherein the controller (199) is configured to:
confirm that cleaning of the milk sampling arrangement (120), the milk sample tube (153) and the milk analyser/s (150a, 150b, 150c) have been performed before performing the milk outlet stage according to claim 2 of a subsequent milk sample.

## Patentansprüche

1. Milchprobenahmesystem (100), umfassend
eine Milchprobenahmeanordnung (120), umfassend
ein unteres Verbindungsstück (121), das konfiguriert ist, um eine Milchprobe vorübergehend zu lagern;
ein oberes Verbindungsstück (124), umfassend
einen beweglichen Deckel (122), der konfiguriert ist,
um an dem unteren Verbindungsstück (121) lösbar befestigbar zu sein, wodurch zusammen mit dem unteren Verbindungsstück (121) in einer geschlossenen Position ein geschlossener Raum ausgebildet wird; und
um von dem unteren Verbindungsstück (121) in einer getrennten Position getrennt zu werden; und
eine Milchrohrspitze (117), die über einen Milchschlauch (115) mit einer Milchquelle (110) verbunden und angeordnet ist, um Milch in das untere Verbindungsstück (121), wenn der Deckel (122) von dem unteren Verbindungsstück (121) getrennt ist, über einen ersten Luftspalt (127) zwischen einem unteren Endabschnitt (118) der Milchrohrspitze (117) und einem oberen Randabschnitt (123) des unteren Verbindungsstücks (121) bereitzustellen;
eine Milchpumpe (119), die angeordnet ist, um Milch von der Milchquelle (110) zu der Milchrohrspitze (117) zu fördern;
ein Betätigungselement (190), das angeordnet ist, um den Deckel (122) in vertikaler Richtung zu drücken, wodurch der Deckel (122) an dem unteren Verbindungsstück (121) in eine geschlossene Position befestigt wird, und/oder den Deckel (122) in vertikaler Richtung zu ziehen, wodurch der Deckel (122) von dem unteren Verbindungsstück (121) in eine getrennte Position getrennt wird;
eine Steuerung (199), die mit der Milchpumpe (119) und dem Betätigungselement (190) kommunikativ verbunden ist, und wobei die Steuerung (199) konfiguriert ist, um in einer Milcheinlasszufuhrstufe:
zu bestätigen, durch das Betätigungselement (190), dass der Deckel (122) in der getrennten Position von dem unteren Verbindungsstück (121) getrennt ist;
einen Befehl an die Milchpumpe (119) zu erzeugen, um Milch von der Milchquelle (110) zu der Milchrohrspitze (117) der Milchprobenahmeanordnung (120), wenn der Deckel (122) in der getrennten Position von dem unteren Verbindungsstück (121) getrennt ist, zu fördern.

2. Milchprobenahmesystem (100) nach Anspruch 1, umfassend:
einen Milchprobenschlauch (153), der einen Auslass (151) des unteren Verbindungsstücks (121) verbindet;
eine Auslasspumpe (159), die angeordnet ist, um Milch von dem Auslass (151) des unteren Verbindungsstücks (121) zu dem Milchprobenschlauch (153) zu fördern;
eine eigenständige Milchprobeneinlasspumpe (157a, 157b, 157c), die angeordnet ist, um Milch von dem Milchprobenschlauch (153) zu einem Milchanalysator (150a, 150b, 150c) zu fördern;
den Milchanalysator (150a, 150b, 150c), der angeordnet ist, um die empfangene Milchprobe zu analysieren;
wobei die Steuerung (199) mit der Auslasspumpe (159) und der eigenständigen Milchprobeneinlasspumpe (157a, 157b, 157c) kommunikativ verbunden ist; und wobei die Steuerung (199) konfiguriert is, um in einer Milchauslassstufe:
einen Befehl an die Auslasspumpe (159) zu erzeugen, um Milch von dem unteren Verbindungsstück (121) über den Auslass (151) des unteren Verbindungsstücks (121) zu dem Milchprobenschlauch (153) zu fördern, wenn die Milchpumpe (119) dem unteren Verbindungsstück (121) Milch bereitgestellt hat; und
einen Befehl an die eigenständige Milchprobeneinlasspumpe (157a, 157b, 157c) zu erzeugen, um Milch von dem Milchprobenschlauch (153) zu dem Milchanalysator (150a, 150b, 150c) zu fördern.

3. Milchprobenahmesystem (100) nach einem der Ansprüche 1 oder 2, umfassend:
eine Wasserquelle (130), umfassend Wasser;
einen Wasserschlauch (135), der mit der Wasserquelle (130) verbunden ist;
einen Wassereinlass (131), der angeordnet ist, um Wasser von der Wasserquelle (130) über den Wasserschlauch (135) aufzunehmen und das aufgenommene Wasser in das untere Verbindungsstück (121) zu fördern, wenn der Deckel (122) in die getrennte Position von dem unteren Verbindungsstück (121) getrennt ist;
einen Wasserdurchflussregler (137), der angeordnet ist, um abwechselnd einen Wasserfluss durch den Wasserschlauch (135) von der Wasserquelle (130) zu dem unteren Verbindungsstück (121) über den Wassereinlass (131) zuzulassen oder zu verweigern; wobei die Steuerung (199) mit dem Wasserdurchlassregler (137) kommunikativ verbunden ist; und konfiguriert ist, um in einer Wasserzufuhrstufe:
zu bestätigen, durch das Betätigungselement (190), dass der Deckel (122) in der getrennten Position von dem unteren Verbindungsstück (121) getrennt ist; und
einen Befehl an den Wasserdurchlassregler (137) zu erzeugen, um einen Fluss durch den Wasserschlauch (135) zu dem unteren Verbindungsstück (121) zuzulassen, wenn der Deckel (122) in der getrennten Position von dem unteren Verbindungsstück (121) getrennt ist.

4. Milchprobenahmesystem (100) nach einem der Ansprüche 1 bis 3, umfassend:
einen Lufteinlass (181), der in dem Deckel (122) angeordnet ist, zum Bereitstellen von Druckluft in das untere Verbindungsstück (121), wenn der Deckel (122) in der geschlossenen Position an dem unteren Verbindungsstück (121) befestigt ist;
ein Luftventil (180), das angeordnet ist, um abwechselnd Druckluft über den Lufteinlass (181) in das untere Verbindungsstück (121) zuzulassen oder zu verweigern; wobei die Steuerung (199) mit dem Luftventil (180) kommunikativ verbunden ist; und konfiguriert ist, um in einer Luftzufuhrstufe:
zu bestätigen, durch das Betätigungselement (190), dass der Deckel (122) an dem unteren Verbindungsstück (121) in der geschlossenen Position befestigt ist; und
einen Befehl an das Luftventil (180) zu erzeugen, um Druckluft in das untere Verbindungsstück (121) zuzulassen, wenn der Deckel (122) in der geschlossenen Position an dem unteren Verbindungsstück (121) befestigt ist.

5. Milchprobenahmesystem (100) nach einem der Ansprüche 1 bis 4, umfassend
einen Reinigungsmitteleinlass (141), der in dem unteren Verbindungsstück (121) angeordnet ist, zum Bereitstellen von Reinigungsmittel aus einer Reinigungsmittelquelle (140) über einen Reinigungsmittelschlauch (145) und zum Fördern des aufgenommenen Reinigungsmittels in das untere Verbindungsstück (121); und
eine Reinigungsmittelpumpe (149), die angeordnet ist, um Reinigungsmittel von einer Reinigungsmittelquelle (140) zu dem unteren Verbindungsstück (121) in dem Reinigungsmittelschlauch (145) über den Reinigungsmitteleinlass (141) zu fördern; wobei die Steuerung (199) mit der Reinigungsmittelpumpe (149) kommunikativ verbunden ist; und konfiguriert ist, um in einer Waschmittelzufuhrstufe:
einen Befehl an die Reinigungsmittelpumpe (149) zu erzeugen, um Reinigungsmittel in das untere Verbindungsstück (121) zuzulassen.

6. Milchprobenahmesystem (100) nach Anspruch 3 und einem der Ansprüche 4 oder 5, wobei die
Steuerung (199) konfiguriert ist, um die Milchprobenahmeanordnung (120) nach der Milchanalyse der Milchprobe durch den Milchanalysator (150a, 150b, 150c) zu reinigen, durch Durchführen von:
der Wasserzufuhrstufe nach Anspruch 3 zum Reinigen der Milchprobenahmeanordnung (120), des Milchprobenschlauchs (153) und des/der Milchanalysators/Milchanalysatoren (150a, 150b, 150c).

7. Milchprobenahmesystem (100) nach Anspruch 5 und 6
6, wobei die Steuerung (199)
konfiguriert ist, um die Milchprobenahmeanordnung (120) nach der Milchanalyse der Milchprobe durch den Milchanalysator (150a, 150b, 150c) zu reinigen, durch Durchführen von:
der Reinigungsmittelzufuhrstufe nach Anspruch 5 zum Reinigen der Milchprobenahmeanordnung (120), des Milchprobenschlauchs (153) und des/der Milchanalysators/Milchanalysatoren (150a, 150b, 150c) zusammen mit dem zugeführten Wasser.

8. Milchprobenahmesystem (100) nach Anspruch 4 und
einem von Anspruch 6 oder Anspruch 7, wobei
die Steuerung (199) konfiguriert ist, um die Milchprobenahmeanordnung (120), den Milchprobenschlauch (153) und den/die Milchanalysator/en (150a, 150b, 150c) nach dem Reinigen zu trocknen, durch Durchführen von:
der Luftzufuhrstufe nach Anspruch 4 zum Trocknen der Milchprobenahmeanordnung (120), des Milchprobenschlauchs (153) und des/der Milchanalysators/Milchanalysatoren (150a, 150b, 150c).

9. Milchprobenahmesystem (100) nach Anspruch 2 und
einem der Ansprüche 6 bis 8, wobei die
Steuerung (199) konfiguriert ist zum:
Bestätigen, dass das Reinigen der Milchprobenahmeanordnung (120), des Milchprobenschlauchs (153) und des Milchanalysators/der Milchanalysatoren (150a, 150b, 150c) durchgeführt wurde, bevor die Milchauslassstufe nach Anspruch 2 einer nachfolgenden Milchprobe durchgeführt wird.

## Revendications

1. Système d'échantillonnage de lait (100) comprenant
un agencement d'échantillonnage de lait (120), comprenant
une partie de liaison inférieure (121), conçue pour stocker temporairement un échantillon de lait ;
une partie de liaison supérieure (124), comprenant
un couvercle mobile (122), conçu
pour être fixé de manière amovible à la partie de liaison inférieure (121), formant de ce fait un espace fermé conjointement avec la partie de liaison inférieure (121), dans une position fermée ; et
pour être séparé de la partie de liaison inférieure (121), dans une position séparée ; et
un embout de tuyau à lait (117) relié à une source de lait (110) par l'intermédiaire d'un tuyau à lait (115) et agencé pour fournir du lait dans la partie de liaison inférieure (121) lorsque le couvercle (122) est séparé de la partie de liaison inférieure (121), par l'intermédiaire d'un premier entrefer (127) entre une section d'extrémité inférieure (118) de l'embout de tuyau à lait (117) et une partie de rebord supérieur (123) de la partie de liaison inférieure (121) ;
une pompe à lait (119), agencée pour acheminer le lait de la source de lait (110) à l'embout de tuyau à lait (117) ;
un actionneur (190), agencé pour pousser le couvercle (122) dans la direction verticale, fixant de ce fait le couvercle (122) à la partie de liaison inférieure (121) dans une position fermée et/ou tirant le couvercle (122) dans une direction verticale, séparant de ce fait le couvercle (122) de la partie de liaison inférieure (121) dans une position séparée ;
un dispositif de commande (199), connecté en communication à la pompe à lait (119) et à l'actionneur (190), et dans lequel le dispositif de commande (199) est configuré pour, dans une étape d'alimentation d'entrée de lait :
confirmer, par l'actionneur (190), que le couvercle (122) est séparé de la partie de liaison inférieure (121) dans la position séparée ;
générer une instruction à la pompe à lait (119) d'acheminer le lait de la source de lait (110) à l'embout de tuyau à lait (117) de l'agencement d'échantillonnage de lait (120) lorsque le couvercle (122) est séparé de la partie de liaison inférieure (121), dans la position séparée.

2. Système d'échantillonnage de lait (100) selon la revendication 1, comprenant :
un tube à échantillon de lait (153) reliant une sortie (151) de la partie de liaison inférieure (121) ;
une pompe de sortie (159), agencée pour acheminer le lait depuis la sortie (151) de la partie de liaison inférieure (121) vers le tube à échantillon de lait (153) ;
une pompe d'entrée d'échantillon de lait distincte (157a, 157b, 157c) agencée pour acheminer le lait du tube à échantillon de lait (153) à un analyseur de lait (150a, 150b, 150c) ;
l'analyseur de lait (150a, 150b, 150c), agencé pour analyser l'échantillon de lait reçu ;
dans lequel le dispositif de commande (199) est connecté en communication à la pompe de sortie (159) et à la pompe d'entrée d'échantillon de lait distincte (157a, 157b, 157c) ; et dans lequel le dispositif de commande (199) est configuré pour, dans une étape de sortie de lait :
générer une instruction à la pompe de sortie (159) d'acheminer le lait de la partie de liaison inférieure (121) par l'intermédiaire de la sortie (151) de la partie de liaison inférieure (121) vers le tube à échantillon de lait (153) lorsque la pompe à lait (119) a fourni du lait à la partie de liaison inférieure (121) ; et
générer une instruction à la pompe d'entrée d'échantillon de lait distincte (157a, 157b, 157c) d'acheminer le lait du tube à échantillon de lait (153) à l'analyseur de lait (150a, 150b, 150c).

3. Système d'échantillonnage de lait (100) selon l'une quelconque de la revendication 1 ou de la revendication 2, comprenant :
une source d'eau (130) comprenant de l'eau ;
un tube à eau (135) relié à la source d'eau (130) ;
une entrée d'eau (131) agencée pour recevoir de l'eau de la source d'eau (130) par l'intermédiaire du tube à eau (135), et acheminer l'eau reçue dans la partie de liaison inférieure (121) lorsque le couvercle (122) est séparé de la partie de liaison inférieure (121), dans la position séparée ;
un régulateur de passage d'eau (137) agencé pour permettre ou empêcher alternativement l'écoulement d'eau à travers le tube à eau (135) depuis la source d'eau (130) jusqu'à la partie de liaison inférieure (121) par l'intermédiaire de l'entrée d'eau (131) ; dans lequel le dispositif de commande (199) est relié en communication au régulateur de passage d'eau (137) ; et configuré pour, dans une étape d'alimentation en eau :
confirmer, par l'actionneur (190), que le couvercle (122) est séparé de la partie de liaison inférieure (121) dans la position séparée ; et
générer une instruction au régulateur de passage d'eau (137) pour permettre un écoulement à travers le tube à eau (135) vers la partie de liaison inférieure (121) lorsque le couvercle (122) est séparé de la partie de liaison inférieure (121), dans la position séparée.

4. Système d'échantillonnage de lait (100) selon l'une quelconque des revendications 1 à 3, comprenant :
une entrée d'air (181) agencée dans le couvercle (122) pour fournir de l'air sous pression dans la partie de liaison inférieure (121) lorsque le couvercle (122) est fixé à la partie de liaison inférieure (121) en position fermée ;
une soupape d'air (180) agencée pour permettre ou empêcher alternativement l'entrée d'air sous pression dans la partie de liaison inférieure (121) par l'intermédiaire de l'entrée d'air (181) ; dans lequel le dispositif de commande (199) est relié en communication à la soupape d'air (180) ; et conçu pour, dans une étape d'alimentation en air :
confirmer, par l'actionneur (190), que le couvercle (122) est fixé à la partie de liaison inférieure (121) dans la position fermée ; et
générer une instruction à la soupape d'air (180) de permettre à l'air sous pression de pénétrer dans la partie de liaison inférieure (121) lorsque le couvercle (122) est fixé à la partie de liaison inférieure (121) en position fermée.

5. Système d'échantillonnage de lait (100) selon l'une quelconque des revendications 1 à 4, comprenant
une entrée de détergent (141), agencée dans la partie de liaison inférieure (121), pour fournir du détergent à partir d'une source de détergent (140) par l'intermédiaire d'un tube à détergent (145), et acheminer le détergent reçu dans la partie de liaison inférieure (121) ; et
une pompe à détergent (149), agencée pour acheminer le détergent à partir d'une source de détergent (140) à la partie de liaison inférieure (121) dans le tube à détergent (145) par l'intermédiaire de l'entrée de détergent (141) ; dans lequel le dispositif de commande (199) est relié en communication à la pompe à détergent (149) ; et configuré pour, dans une étape d'alimentation en détergent :
générer une instruction à la pompe à détergent (149) de permettre au détergent de pénétrer dans la partie de liaison inférieure (121).

6. Système d'échantillonnage de lait (100) selon la revendication 3 et l'une quelconque des revendications 4 ou 5, dans lequel
le dispositif de commande (199) est configuré pour nettoyer l'agencement d'échantillonnage de lait (120), après l'analyse de l'échantillon de lait par l'analyseur de lait (150a, 150b, 150c), en réalisant :
l'étape d'alimentation en eau selon la revendication 3, pour nettoyer l'agencement d'échantillonnage de lait (120), le tube à échantillon de lait (153) et l'analyseur ou les analyseurs de lait (150a, 150b, 150c).

7. Système d'échantillonnage de lait (100) selon les revendications 5 et 6,
dans lequel le dispositif de commande (199)
est configuré pour nettoyer l'agencement d'échantillonnage de lait (120) après l'analyse de lait de l'échantillon de lait par l'analyseur de lait (150a, 150b, 150c), en réalisant :
l'étape d'alimentation en détergent selon la revendication 5, destinée à nettoyer l'agencement d'échantillonnage de lait (120), le tube à échantillon de lait (153) et l'analyseur ou les analyseurs de lait (150a, 150b, 150c) conjointement avec l'eau fournie.

8. Système d'échantillonnage de lait (100) selon la revendication 4 et
l'une quelconque de la revendication 6 ou de la revendication 7, dans lequel
le dispositif de commande (199) est configuré pour sécher l'agencement d'échantillonnage de lait (120), le tube à échantillon de lait (153) et l'analyseur ou les analyseurs de lait (150a, 150b, 150c) après nettoyage, en réalisant :
l'étage d'alimentation en air selon la revendication 4, pour le séchage de l'agencement d'échantillonnage de lait (120), du tube à échantillon de lait (153) et de l'analyseur ou des analyseurs de lait (150a, 150b, 150c).

9. Système d'échantillonnage de lait (100) selon la revendication 2 et
l'une quelconque des revendications 6 à 8, dans lequel
le dispositif de commande (199) est configuré pour :
confirmer que le nettoyage de l'agencement d'échantillonnage de lait (120), du tube à échantillon de lait (153) et de l'analyseur ou des analyseurs de lait (150a, 150b, 150c) a été effectué avant la réalisation de l'étape de sortie de lait selon la revendication 2 d'un échantillon de lait ultérieur.
